# EUROPEAN PATENT APPLICATION

(11) **EP 4 838 350 A1**
(43) Date of publication of application: **11.11.2026**
(21) Application number: 25209138.4
(22) Date of filing: 16.10.2025
(51) Int. Cl.: G06F 3/12

(54) **INFORMATION PROCESSING SYSTEM, PROGRAM, AND INFORMATION PROCESSING METHOD**

(30) Priority: 08.05.2025 JP 2025077958
(71) Applicant: FUJIFILM Business Innovation Corp., Minato-ku Tokyo (JP)
(72) Inventor: HANAZATO, Eiichi, Yokohama-shi, Kanagawa (JP)
(74) Representative: Becker Kurig & Partner Patentanwälte mbB

(57) **Abstract**

An information processing system includes a processor configured to: convert, among images of an inspection target region included in print data to be printed, an image with which a preset inspection condition is not satisfied into an image with which the inspection condition is satisfied.

## Description

### BACKGROUND OF THE INVENTION

### (i) Field of the Invention

The present disclosure relates to an information processing system, a program, and an information processing method.

### (ii) Description of Related Art

JP2024-150027A discloses an inspection system that, in a case of setting a region for performing an extraction process of extracting data from an image formed on a printout, displays a margin region required for the extraction process in an identifiable manner with respect to the set region.

### SUMMARY OF THE INVENTION

In a printing apparatus for business, while executing a printing process for a printout, the presence or absence of a defect such as a printing stain or a printing failure on the printout may be inspected by an inspection apparatus. In addition, in such an inspection apparatus, it may also be performed to inspect whether code information printed on the printout can be scanned or whether a printed text is a set text. In a case where such an inspection is performed on the printout, there is a possibility that correct inspection may not be performed in a case where a preset condition is not satisfied with a code image and a text image in the printout. That is, in a case where a user generates print data that does not match the inspection condition, the inspection is not correctly performed, and erroneous detection occurs. Meanwhile, a lot of time and effort is required for the user to understand such an inspection condition in advance and generate the print data.

An object of the technology of the present disclosure is to provide an information processing system, a program, and an information processing method capable of generating print data with which an inspection condition is satisfied even in a case where a user does not understand the inspection condition in a case of inspecting a printout.

According to a first aspect of the present disclosure, there is provided an information processing system including: a processor configured to: convert, among images of an inspection target region included in print data to be printed, an image with which a preset inspection condition is not satisfied into an image with which the inspection condition is satisfied.

According to a second aspect of the present disclosure, in the information processing system according to the first aspect, the processor may be configured to: convert, among images of an inspection target location included in the print data to be printed, an image with which the inspection condition is not satisfied into an image with which the inspection condition is satisfied, according to a conversion level for setting a conversion degree in a case of converting the image of the inspection target location.

According to a third aspect of the present disclosure, in the information processing system according to the first aspect or the second aspect, the processor may be configured to: determine an image with which a preset condition is satisfied among the images included in the print data, as the image of the inspection target region.

According to a fourth aspect of the present disclosure, in the information processing system according to the third aspect, the processor may be configured to: determine a region in which a printing content changes for each page of a printout, as the inspection target region.

According to a fifth aspect of the present disclosure, in the information processing system according to the third aspect, the processor may be configured to: determine a region including a code image as the inspection target region.

According to a sixth aspect of the present disclosure, in the information processing system according to any one aspect of the first aspect to the fifth aspect, the processor may be configured to: for print data having an identical printing content for each page, by using an image obtained by duplicating a first page as an inspection page, convert an image with which the inspection condition is not satisfied into an image with which the inspection condition is satisfied, among images of an inspection target region included in print data of the inspection page.

According to a seventh aspect of the present disclosure, in the information processing system according to the sixth aspect, the processor may be configured to: convert a code image included in the print data into an image with which the inspection condition is satisfied even in a case where the code image is located on a page other than the inspection page.

According to an eighth aspect of the present disclosure, in the information processing system according to any one aspect of the first aspect to the seventh aspect, the processor may be configured to: display a printing result based on print data after the image of the inspection target region is converted into the image with which the preset inspection condition is satisfied on a display unit before a start of a printing process, and start the printing process in a case where a printing start instruction is received.

According to a ninth aspect of the present disclosure, in the information processing system according to any one aspect of the first aspect to the eighth aspect, in a case where the image of the inspection target region is a code image, at least one condition among a peripheral margin amount of the code image, a background color, a code type, a code color, or a size of the code image may be set as the inspection condition, and in a case where the image of the inspection target region is a text image, at least one condition among a text type, a font type of the text, a font size, a text color, a background color, or a peripheral margin amount of the text image may be set as the inspection condition.

According to a tenth aspect of the present disclosure, there is provided a program causing a computer to execute: receiving print data to be printed; and converting, among images of an inspection target region included in the print data, an image with which a preset inspection condition is not satisfied into an image with which the inspection condition is satisfied.

According to an eleventh aspect of the present disclosure, there is provided an information processing method including: receiving print data to be printed; and converting, among images of an inspection target region included in the print data, an image with which a preset inspection condition is not satisfied into an image with which the inspection condition is satisfied.

With the information processing system according to the first aspect of the present disclosure, it is possible to generate the print data with which the inspection condition is satisfied even in a case where a user does not understand the inspection condition in inspecting the printout.

With the information processing system according to the second aspect of the present disclosure, it is possible to adjust the conversion degree in a case of converting the image of the inspection target location.

With the information processing system according to the third aspect of the present disclosure, it is possible to save time and effort of the user for designating the image of the inspection target region.

With the information processing system according to the fourth aspect of the present disclosure, it is possible to save the time and effort of the user for designating the image of the region in which the printing content changes for each page as the image of the inspection target region.

With the information processing system according to the fifth aspect of the present disclosure, it is possible to save the time and effort of the user who designates the code image as the image of the inspection target region.

With the information processing system according to the sixth aspect of the present disclosure, it is possible to prevent the same inspection from being executed on all pages for the print data having an identical printing content for each page.

With the information processing system according to the seventh aspect of the present disclosure, it is possible to prevent occurrence of a defect in which the code image of the printout cannot be scanned.

With the information processing system according to the eighth aspect of the present disclosure, the printing process can be started after a check by the user.

With the information processing system according to the ninth aspect of the present disclosure, it is possible to generate the print data with which the inspection condition is satisfied even in a case where the user does not understand the inspection condition in inspecting the printout including the code image or the text image.

With the program according to the tenth aspect of the present disclosure, it is possible to generate the print data with which the inspection condition is satisfied even in a case where the user does not understand the inspection condition in inspecting the printout.

With the information processing method according to the eleventh aspect of the present disclosure, it is possible to generate the print data with which the inspection condition is satisfied even in a case where the user does not understand the inspection condition in inspecting the printout.

### BRIEF DESCRIPTION OF THE DRAWINGS

Exemplary embodiment(s) of the present invention will be described in detail based on the following figures, wherein:
FIG. 1 is a diagram illustrating a system configuration of an image forming system according to an exemplary embodiment of the present disclosure;
FIG. 2 is a block diagram illustrating a hardware configuration of a terminal apparatus 10 in the exemplary embodiment of the present disclosure;
FIG. 3 is a block diagram illustrating a functional configuration of the terminal apparatus 10 in the exemplary embodiment of the present disclosure;
FIG. 4 is a diagram illustrating an image example of an inspection target based on print data for executing a printing process in the exemplary embodiment of the present disclosure;
FIG. 5 is a diagram illustrating an example of an inspection condition in a case where a region including a text image is set as an inspection target region;
FIG. 6 is a diagram illustrating an example of an inspection condition in a case where a region including a code image is set as the inspection target region;
FIG. 7 is a diagram illustrating a conversion degree of each conversion level in a case where the conversion level is set to three stages of "high", "medium", and "low";
FIG. 8 is a diagram illustrating an example of a preview display screen in a case where an image of the inspection target region included in the print data example illustrated in FIG. 4 is converted into an image with which an inspection condition is satisfied;
FIG. 9 is a diagram illustrating a state in which the images of the inspection target regions 41 to 45 are converted;
FIG. 10 is a diagram illustrating an image example based on print data for printing a printout having an identical printing content for each page;
FIG. 11 is a diagram illustrating an image example of an inspection page after the image illustrated in FIG. 10 is converted and an image example of a page other than the inspection page;
FIG. 12 is a flowchart describing an operation in a case of generating print data in the terminal apparatus 10 according to the exemplary embodiment of the present disclosure;
FIG. 13 is a flowchart describing details of a process in a case of setting the inspection target region described in step S102 of the flowchart in FIG. 12; and
FIG. 14 is a flowchart describing details of a process in a case of setting a conversion target page described in step S103 of the flowchart in FIG. 12.

### DETAILED DESCRIPTION OF THE INVENTION

Hereinafter, exemplary embodiments of the present disclosure will be described in detail with reference to the drawings.

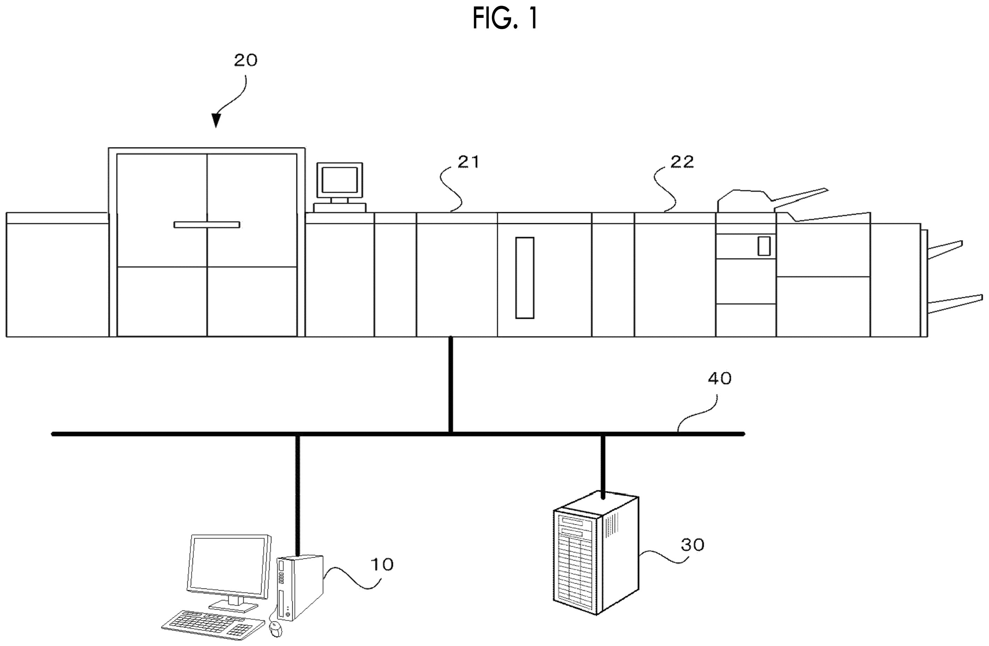

FIG. 1 is a diagram illustrating a system configuration of an image forming system according to an exemplary embodiment of the present disclosure.

As illustrated in FIG. 1, an image forming system according to an exemplary embodiment of the present disclosure is configured with a terminal apparatus 10, a printing apparatus 20, and an inspection apparatus 30 that are connected to each other by a network 40. The terminal apparatus 10 generates print data based on an image to be printed, and transmits the generated print data to the printing apparatus 20 via the network 40. The printing apparatus 20 receives the print data transmitted from the terminal apparatus 10, and prints an image corresponding to the print data on paper. Further, the printing apparatus 20 includes a scanning device 21 and a switching device 22. The scanning device 21 scans the image printed on the paper, and transmits the image to the inspection apparatus 30 as a scan image. The switching device 22 switches a discharge destination to discharge the paper transported via a transport passage based on an instruction from the terminal apparatus 10. The printing apparatus 20 has a plurality of discharge destinations.

The inspection apparatus 30 is an apparatus for inspecting the presence or absence of a defect in the image printed by the printing apparatus 20. The inspection apparatus 30 receives a raster image processing (RIP) image of an image to be printed by the printing apparatus 20 from the terminal apparatus 10 as a reference image. The RIP image is an image with which an image to be printed is represented in a bitmap format. Then, the inspection apparatus 30 collates the reference image received from the terminal apparatus 10 with the scan image received from the scanning device 21 of the printing apparatus 20 to inspect the presence or absence of a defect such as a stain, a chip, a streak, paper folding, and printing misalignment in the printout.

In a case of a printout in which all pages have the same content, there is only one reference image. Therefore, the inspection apparatus 30 continues to compare one reference image with the scan images sequentially transmitted from the scanning device 21. Meanwhile, in a case of a printout in which the printing content differs for each page, the reference image for each page is sequentially transmitted from the terminal apparatus 10 to the inspection apparatus 30. Then, in the inspection apparatus 30, the reference image sequentially transmitted from the terminal apparatus 10 and the scan image sequentially transmitted from the scanning device 21 are compared with each other.

Then, the inspection apparatus 30 notifies the terminal apparatus 10 of an inspection result each time the inspection is performed. In the terminal apparatus 10, the inspection result is received from the inspection apparatus 30, and the switching device 22 is controlled such that a print page which is determined to have a problem by the inspection apparatus 30 is discharged to a discharge destination different from a discharge destination to which a normal print page is discharged. In addition, in the terminal apparatus 10, the inspection result is displayed on a screen from the inspection apparatus 30.

By performing such a process, the page determined to have no problem in the inspection and the page determined to have a problem in the inspection are discharged to different discharge destinations. That is, it is possible to detect a defect such as a stain, a chip, a streak, paper folding, and printing misalignment in the printout and to remove the printout with the defect. In addition, it is also possible to perform an inspection in which an image of a one-dimensional code such as a barcode included in a printout or an image of a two-dimensional code such as a QR code (registered trademark) is scanned and whether or not the image matches preset information is determined.

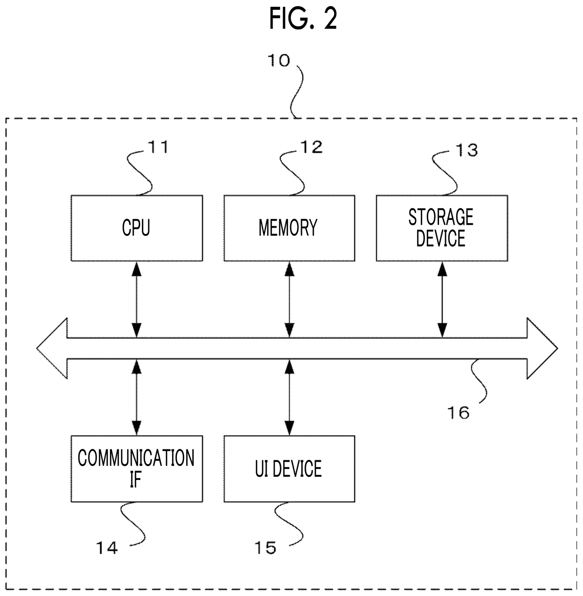

Next, a hardware configuration of the terminal apparatus 10 in the image forming system of the present exemplary embodiment is illustrated in FIG. 2.

As illustrated in FIG. 2, the terminal apparatus 10 includes a CPU 11, a memory 12, a storage device 13 such as a hard disk drive, a communication interface (IF) 14 for transmitting and receiving data to and from an external apparatus via the network 40, and a user interface (UI) device 15 including a touch panel or a liquid crystal display and a keyboard. These components are connected to each other via a control bus 16.

The CPU 11 is a processor that controls the operation of the terminal apparatus 10 by executing a predetermined process based on a control program stored in the memory 12 or the storage device 13. Note that, in the present exemplary embodiment, the CPU 11 reads the control program stored in the memory 12 or the storage device 13 and executes the control program. On the other hand, the present disclosure is not limited thereto. The control program may be provided in a form recorded on a computer-readable recording medium. For example, the program may be provided in a form of being recorded on an optical disk such as a compact disc (CD)-ROM and a digital versatile disc (DVD)-ROM, or in a form of being recorded on a semiconductor memory such as a Universal Serial Bus (USB) memory and a memory card. Further, the control program may be acquired from an external apparatus via a communication line connected to the communication interface 14. Further, the control program may be provided, for example, as single application software or may be incorporated, as one function of the terminal apparatus 10, in software of each apparatus.

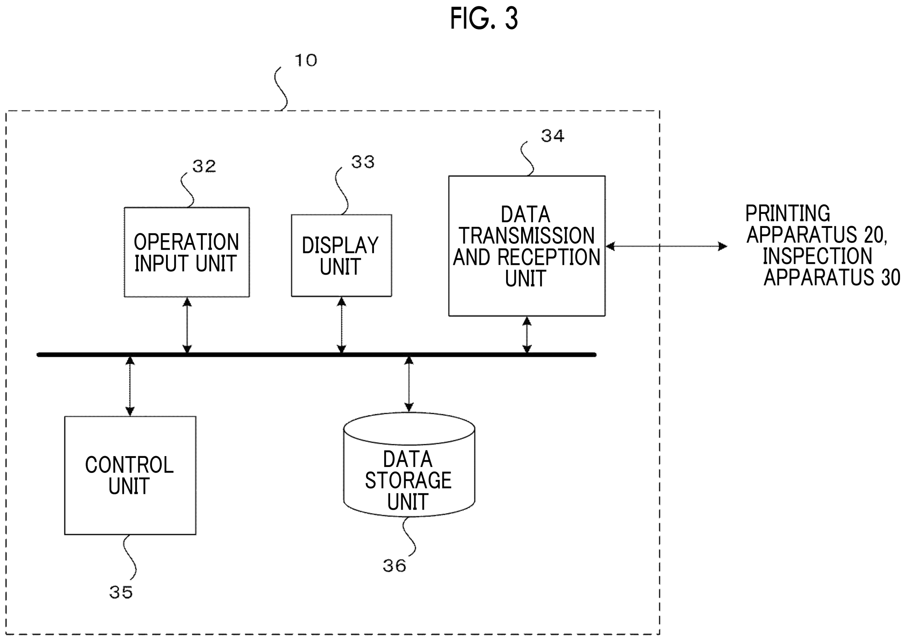

FIG. 3 is a block diagram illustrating a functional configuration of the terminal apparatus 10 realized by executing the above control program.

As illustrated in FIG. 3, the terminal apparatus 10 of the present exemplary embodiment includes an operation input unit 32, a display unit 33, a data transmission and reception unit 34, a control unit 35, and a data storage unit 36.

The data transmission and reception unit 34 transmits and receives data to and from an external apparatus such as the printing apparatus 20 and the inspection apparatus 30.

The control unit 35 transmits a printing start instruction and a discharge destination switching instruction to the printing apparatus 20 via the data transmission and reception unit 34, or transmits an inspection setting and an RIP image to the inspection apparatus 30. In addition, the control unit 35 receives an inspection result from the inspection apparatus 30 via the data transmission and reception unit 34. The data storage unit 36 stores various types of data such as the RIP image, the inspection setting, and the inspection result generated in the terminal apparatus 10.

The display unit 33 is controlled by the control unit 35 and displays various types of information to a user. The operation input unit 32 inputs information on various operations performed by the user. The inspection setting is input from the user to the control unit 35 via the operation input unit 32, and the control unit 35 displays contents of the input inspection setting on the display unit 33.

In a case where a printout is inspected in the image forming system of the present exemplary embodiment, there is a possibility that the correct inspection is not performed in a case where a preset inspection condition is not satisfied with a code image and a text image in the printout. That is, in a case where the user generates print data that does not match the inspection condition, the inspection is not correctly performed, and erroneous detection occurs. Meanwhile, a lot of time and effort is required for the user to understand such an inspection condition in advance and generate the print data.

Therefore, in the image forming system of the present exemplary embodiment, by using a method as described below, it is possible to generate the print data in which the inspection condition is satisfied even in a case where the user does not understand the inspection condition in a case of inspecting the printout.

Next, an operation of the image forming system according to the present exemplary embodiment will be described in detail with reference to the drawings.

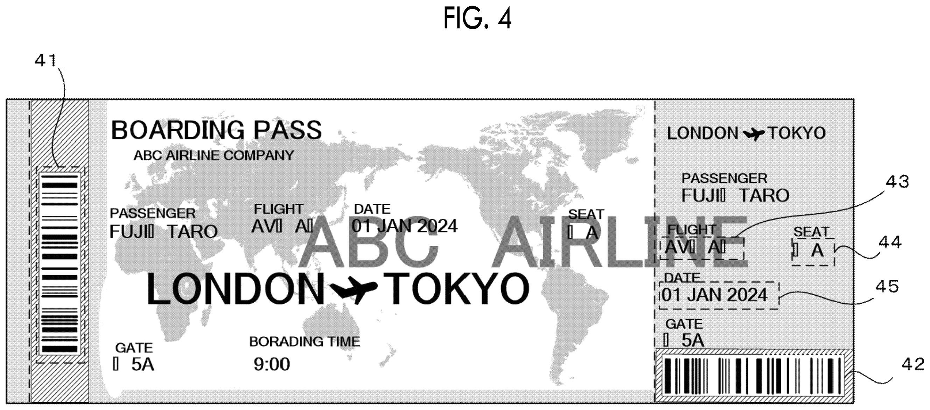

First, in the present exemplary embodiment, an image example of an inspection target based on print data for executing a printing process is illustrated in FIG. 4. The image example of the inspection target illustrated in FIG. 4 is an image including a region in which a printing content changes for each page of a printout. That is, this print data includes variable data of which the content changes for each page. Then, in the image example of the inspection target illustrated in FIG. 4, inspection target regions 41 to 45 of five locations are set. The inspection target regions 41 and 42 are regions including a code image of a one-dimensional code. In addition, the inspection target regions 43 to 45 are regions in which the printing content changes for each page of the printout.

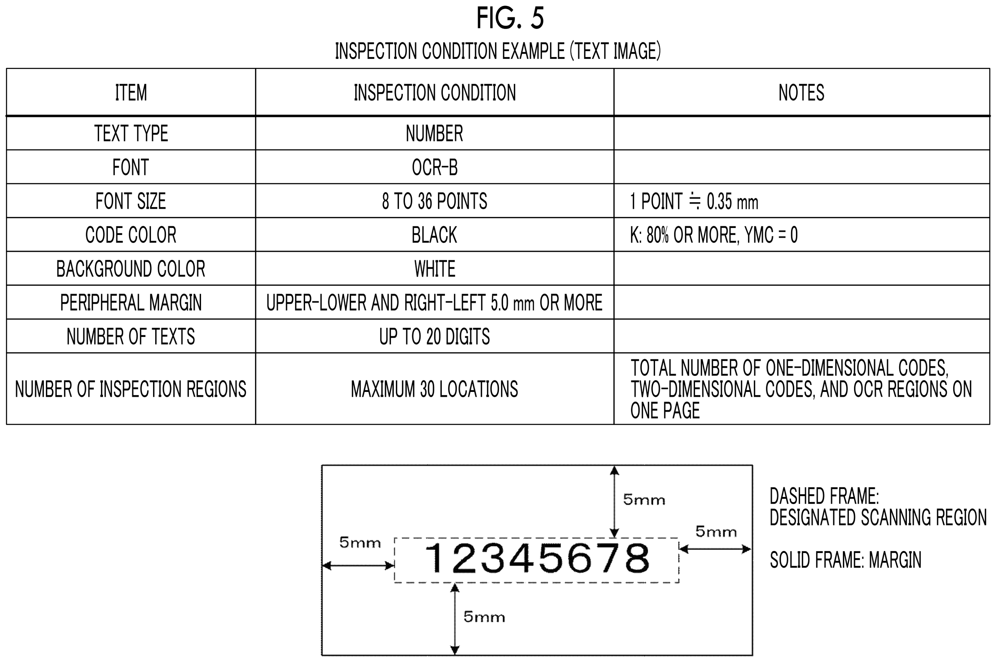

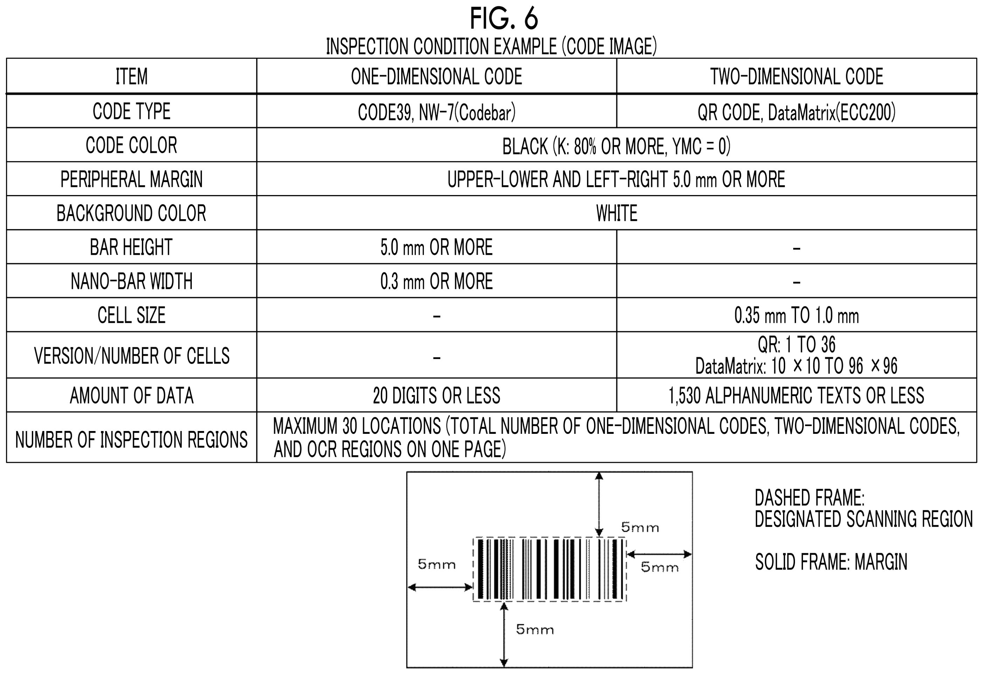

Meanwhile, as described above, in a case where the inspection on an image of the inspection target region is to be executed, the image of the inspection target region needs to satisfy a preset inspection condition to normally execute the inspection. Such an example of the inspection condition is illustrated in FIGS. 5 and 6.

FIG. 5 illustrates an example of an inspection condition in a case where a region including a text image is set as an inspection target region. In a case where the region including the text image is set as the inspection target region, an optical character reading (OCR) inspection of scanning the text image and converting the text image into text information is performed. Therefore, a condition required for accurately scanning the text image and converting the text image into the text information is set as the inspection condition. FIG. 5 illustrates an example of the inspection condition in which a number is the inspection target.

In FIG. 5, inspection conditions such as a text type being a number, a font of the text being OCR-B, and a font size being in a range of 8 to 36 points are set. In addition, various inspection conditions such as a condition that a code color is black, a condition that a background color is white, and a condition that upper-lower and right-left margins are 5.0 mm or more are set.

In addition, FIG. 6 illustrates an example of an inspection condition in a case where a region including a code image is set as the inspection target region. In a case where the region including the code image is set as the inspection target region, a code image inspection of scanning the code image and converting the code image into text information is performed. Therefore, a condition required for accurately scanning the code image and converting the code image into the text information are set as the inspection condition.

In FIG. 6, various inspection conditions such as that the code is a code generated based on a standard in which a code type is set, a code color is black, upper-lower and right-left margins are 5.0 mm or more, and a background color is white are set. In addition, various inspection conditions such as a bar height of 5.0 mm or more and a narrow bar width of 0.3 mm or more are set for a one-dimensional code such as a barcode. In addition, for a two-dimensional code such as a QR code (registered trademark), various inspection conditions such as a cell size of 0.35 mm to 1.0 mm, a version, and the number of cells are set.

In order for the image of the inspection target region to be correctly inspected in this manner, various inspection conditions need to be satisfied. Meanwhile, it takes a lot of time and effort for the user who generates print data to generate the print data satisfying all the inspection conditions illustrated in FIGS. 5 and 6.

Therefore, in the image forming system of the present exemplary embodiment, in a case of generating the print data in the terminal apparatus 10, the control unit 35 converts an image with which the preset inspection condition is not satisfied among the images of the inspection target region included in the print data to be printed into an image with which the inspection condition is satisfied.

Meanwhile, in a case where the image with which the inspection condition is not satisfied is converted into the image with which the inspection condition is satisfied, the design of the entire image is changed. Therefore, a conversion level for setting a conversion degree in a case of converting an image of an inspection target location may be set. Here, the conversion degree means the degree of change in a case of converting the image of the inspection target location. That is, in a case where the conversion degree is large, the image of the inspection target location is largely changed from the original image. On the contrary, in a case where the conversion degree is small, the image of the inspection target location is not changed much from the original image.

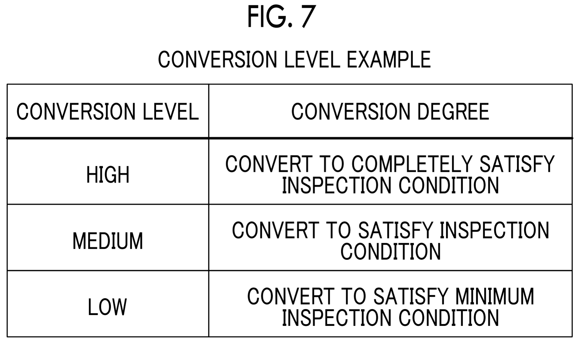

For example, FIG. 7 illustrates a conversion degree of each conversion level in a case where the conversion level is set to three stages of "high", "medium", and "low". With reference to FIG. 7, a case where the conversion level is "high" means that an image of an inspection target location is largely converted from an original image such that an inspection condition is completely satisfied. In addition, a case where the conversion level is "low" means that the image of the inspection target location is not changed as much as possible from the original image such that a minimum inspection condition is completely satisfied.

Then, the control unit 35 converts an image with which the inspection condition is not satisfied among images of the inspection target location included in print data to be printed, into an image with which the inspection condition is satisfied, according to the conversion level for setting the conversion degree in a case of converting the image of the inspection target location.

In addition, the control unit 35 determines an image with which a preset condition is satisfied among the images included in the print data, as an image of an inspection target region.

For example, the control unit 35 determines a region in which variable data in which the printing content changes for each page of the printout is printed as the inspection target region. In addition, the control unit 35 determines that the region including the code image is the inspection target region.

It is considered that, for a printout in which the printing content is identical for each page, in a case where there is no problem with the inspection of one page, there is a high possibility that there is no problem with other pages. Therefore, the control unit 35 sets an image obtained by duplicating a first page as an inspection page for the print data of which the printing content is identical on each page. Then, the control unit 35 may convert an image with which the inspection condition is not satisfied, among the images of the inspection target region included in the print data of the inspection page, into an image with which the inspection condition is satisfied.

In this manner, for pages other than the inspection page, it is not necessary to convert the image of the inspection target region into an image with which the inspection condition is satisfied. Meanwhile, in the code image printed on the printout, in a case where the code image is not actually scannable, the function of the code image is not effectively used. Then, in a case where the inspection condition of the code image is satisfied, the code image printed on the printout can be scanned.

Therefore, for a printout in which the printing content is identical for each page, the control unit 35 may convert the code image included in the print data into an image with which the inspection condition is satisfied, even for a page other than the inspection page.

In a case where the image of the inspection target region is automatically converted into another image as described above, a printout that the user does not intend to print is printed. Therefore, the control unit 35 causes the display unit 33 to display a preview of a printing result based on the print data after converting the image of the inspection target region into an image with which the preset inspection condition is satisfied before a start of a printing process. Then, in a case where a printing start instruction is received from the user, the control unit 35 starts the printing process based on the print data.

Here, in a case where the image of the inspection target region is a code image, at least one condition among the peripheral margin amount of the code image, a background color, a code type, a code color, or a size of the code image is set as the inspection condition. In addition, in a case where the image of the inspection target region is a text image, at least one condition among a text type, a font type of the text, a font size, a text color, a background color, or the peripheral margin amount of the text image is set as the inspection condition.

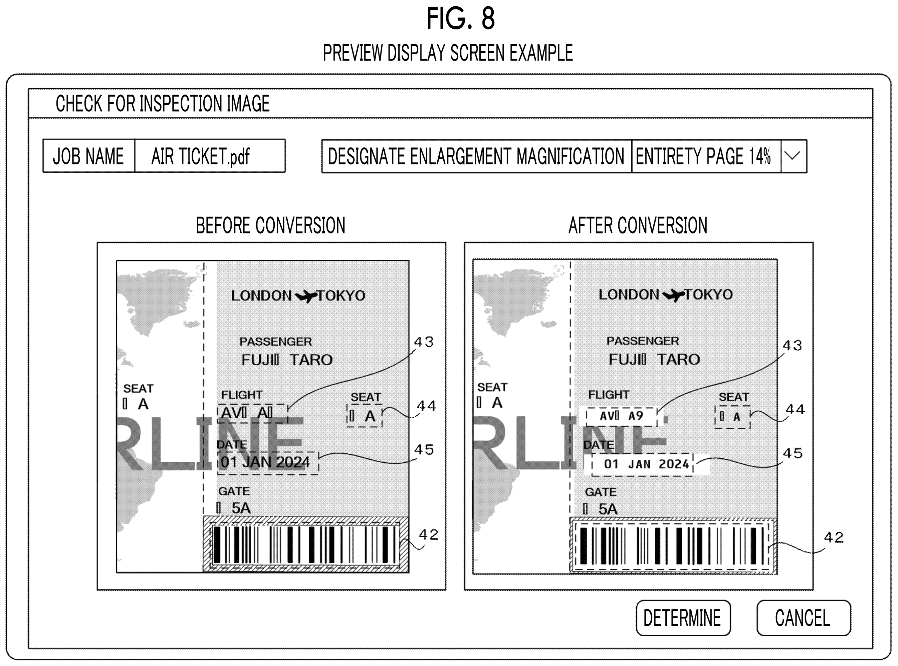

Next, FIG. 8 illustrates an example of a preview display screen in a case where the image of the inspection target region included in the print data example illustrated in FIG. 4 is converted into an image with which the inspection condition is satisfied.

In the display screen example in FIG. 8, it can be seen that text images of the inspection target regions 43 to 45 are converted into a font of OCR-B, margins are provided around the texts, and background colors are converted into white. In addition, a code image of the inspection target region 42 is converted such that a size of the code image is adjusted and upper-lower and right-left margins of 5.0 mm or more are provided.

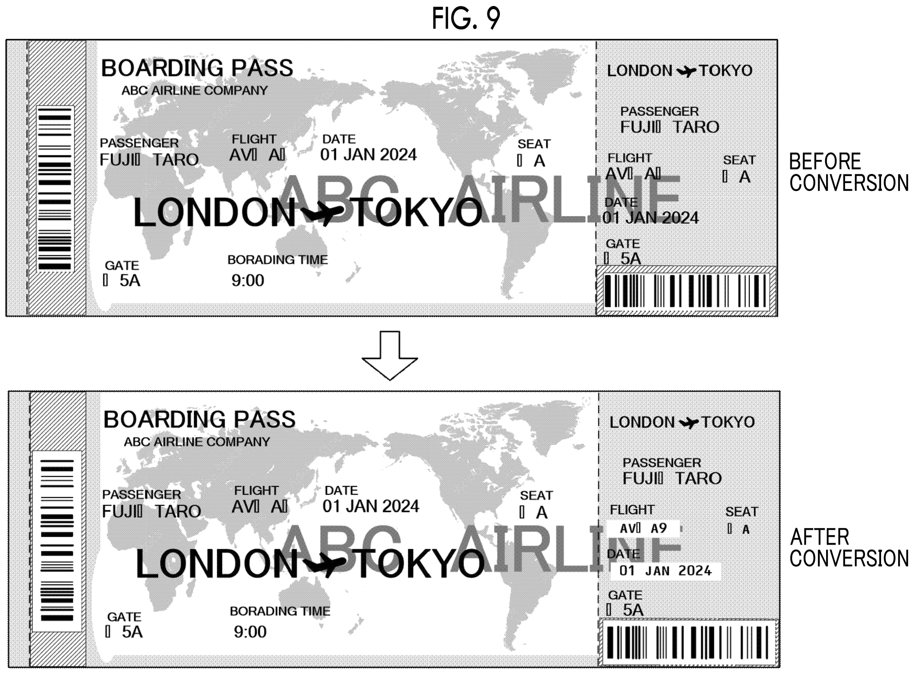

In a case where the user presses a determination button on such a preview display screen, the images of the inspection target regions 41 to 45 of the print data illustrated in FIG. 4 are converted into images with which the inspection condition is satisfied. FIG. 9 illustrates a state in which the images of the inspection target regions 41 to 45 are converted in this manner.

In FIG. 9, the images of the inspection target regions 41 to 45 included in the print data example illustrated in FIG. 4 are converted into images with which the inspection condition is satisfied.

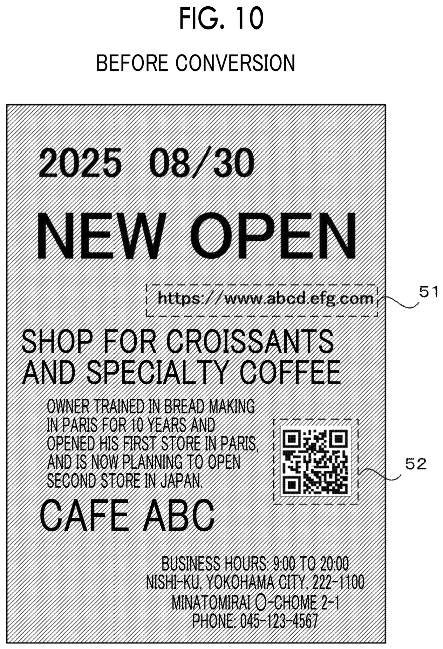

Next, FIG. 10 illustrates an image example based on print data for printing a printout in which a printing content is identical for each page.

FIG. 10 illustrates an image example in a case where a large amount of printout having an identical content is printed, for example, for a flyer sheet in a case where a certain shop is opened. In this image example, it will be described that a user wants to inspect whether or not a text string indicating a uniform resource locator (URL) of a web page of the shop is incorrect and inspect whether or not a two-dimensional code is scannable. In this case, the user designates a region in which the text string of the URL is printed as an inspection target region 51, and sets a region in which the two-dimensional code is printed as an inspection target region 52.

Then, the control unit 35 performs image conversion by converting the text of the inspection target region 51 into a scannable font, providing a margin around the text such that an inspection condition is satisfied, and setting a background color to white. In addition, the control unit 35 performs the image conversion by providing a margin around the two-dimensional code of the inspection target region 52 such that the inspection condition is satisfied.

The control unit 35 performs the image conversion on only the inspection page, for the inspection target region 51. Meanwhile, the control unit 35 executes the image conversion not only on the inspection page but also on all pages, for the inspection target region 52. That is, since the two-dimensional code needs to be scannable after printing, satisfying the inspection condition is necessary not only for inspection but also for a printout that is actually printed.

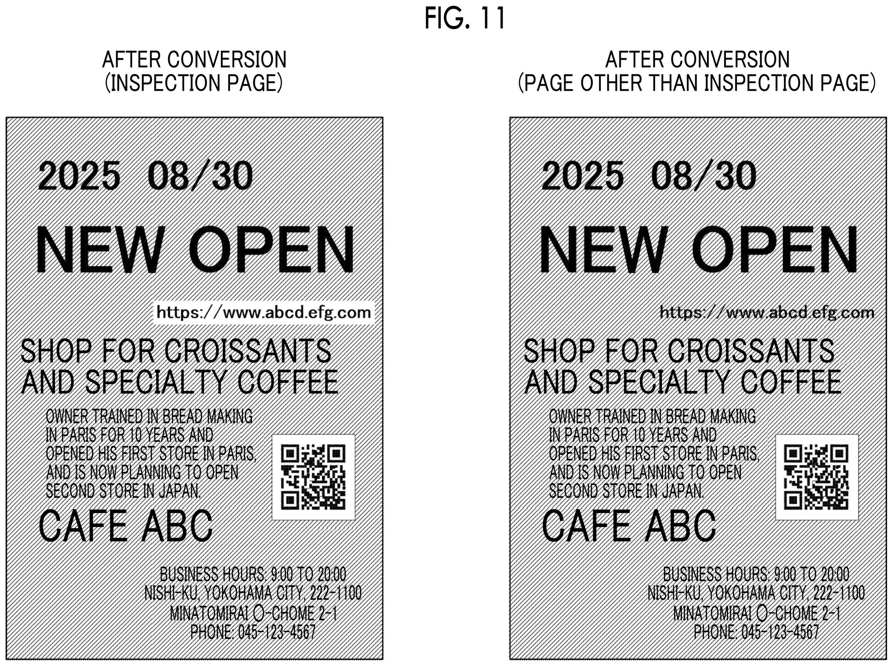

FIG. 11 illustrates an image example of the inspection page and an image example of a page other than the inspection page after the conversion is performed in this manner.

With reference to FIG. 11, in the image example of the inspection page, the background color of the inspection target region 51 is converted to white. Meanwhile, in the image example of the page other than the inspection page, it can be seen that the background color of the inspection target region 51 is the color of the original image. Meanwhile, it can be seen that the margins around the image of the two-dimensional code of the inspection target region 52 are enlarged to satisfy the inspection condition, in both the image of the inspection page and the page image other than the inspection page.

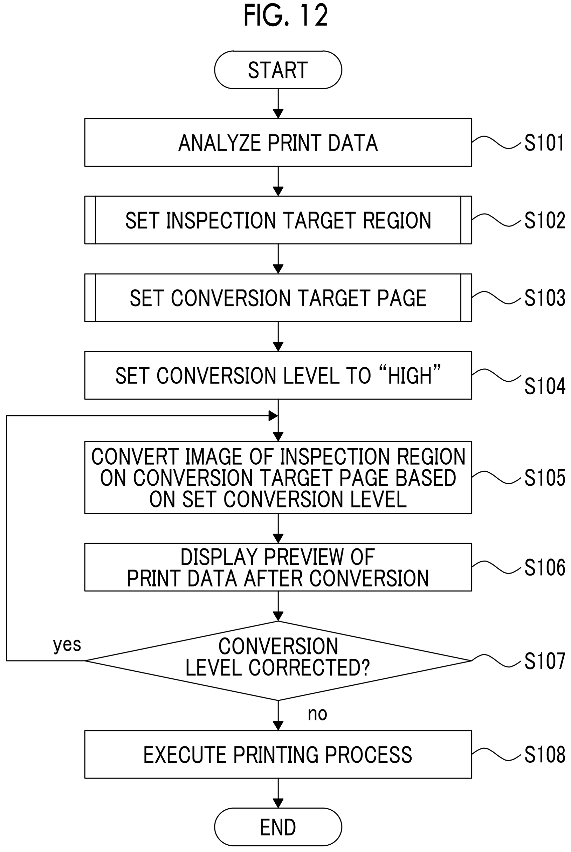

Next, an operation in a case of generating print data in the terminal apparatus 10 of the present exemplary embodiment will be described with reference to the flowchart in FIG. 12.

First, in step S101, the control unit 35 analyzes print data to be inspected. Then, in step S102, the control unit 35 sets an inspection target region from among a plurality of regions in an image of the print data.

Next, in step S103, the control unit 35 sets a conversion target page. Then, in step S104, the control unit 35 sets a conversion level to "high" as an initial setting.

Then, in step S105, the control unit 35 converts an image with which the inspection condition is not satisfied among images of the inspection target region of a conversion target page into an image that satisfies the inspection condition based on the set conversion level.

Then, in step S106, the control unit 35 displays a preview of the converted print data on the display unit 33.

Next, in step S107, the control unit 35 determines whether or not the conversion level is corrected by a user on a preview display screen.

In a case where it is determined in step S107 that the conversion level is corrected, the control unit 35 repeats the processes in step S105 and step S106 again.

Then, in a case where the conversion level is not corrected in step S107, the control unit 35 executes a printing process based on the converted print data in step S108.

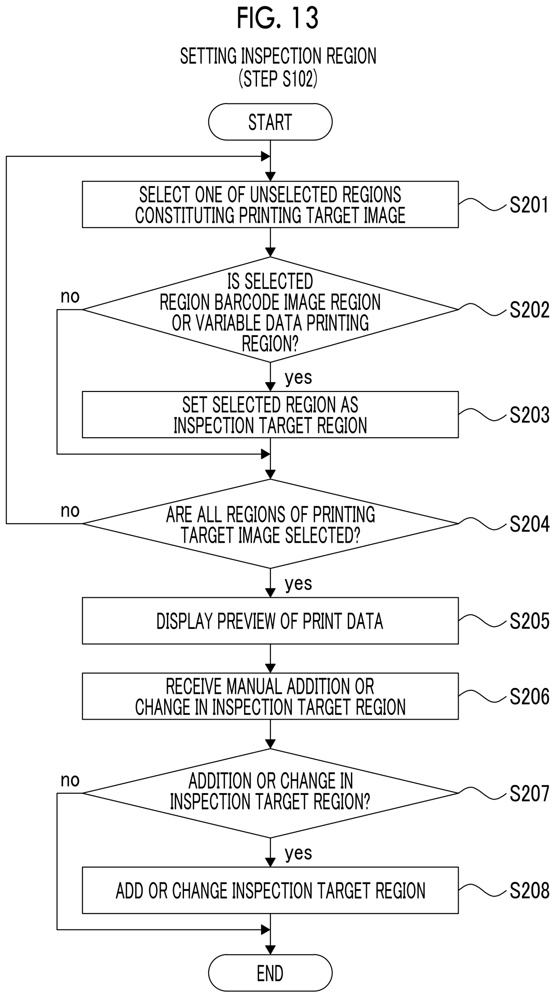

Next, details of the process in a case of setting the inspection target region described in step S102 of the flowchart in FIG. 12 will be illustrated in the flowchart in FIG. 13.

First, in step S201, the control unit 35 selects one unselected region from among the plurality of regions constituting the print target image.

Then, in step S202, the control unit 35 determines whether or not the selected region is a region of a barcode image or a printing region of variable data.

In a case where it is determined in step S202 that the selected region is the region of the barcode image or the printing region of the variable data, the control unit 35 sets the region as the inspection target region in step S203. Then, in step S204, the control unit 35 determines whether or not all the regions in the print target image are selected.

In addition, in a case where it is determined in step S202 that the selected region is neither the region of the barcode image nor the printing region of the variable data, the control unit 35 proceeds to the process in step S204.

In a case where it is determined in step S204 that all the regions in the print target image are not yet selected, the control unit 35 returns to the process in step S201.

In addition, in a case where it is determined in step S204 that all the regions in the print target image are already selected, the control unit 35 displays a preview of the print data in which the inspection target region is set in step S205.

Then, in step S206, the control unit 35 receives the user's manual addition or change of the inspection target region. Next, in step S207, the control unit 35 determines whether or not the addition or change of the inspection target region is performed.

Then, in a case where it is determined in step S207 that the inspection target region is added or changed, the control unit 35 adds or changes the inspection target region in step S208 and ends the process. In addition, in a case where it is determined in step S207 that the addition or change of the inspection target region is not performed, the control unit 35 ends the process.

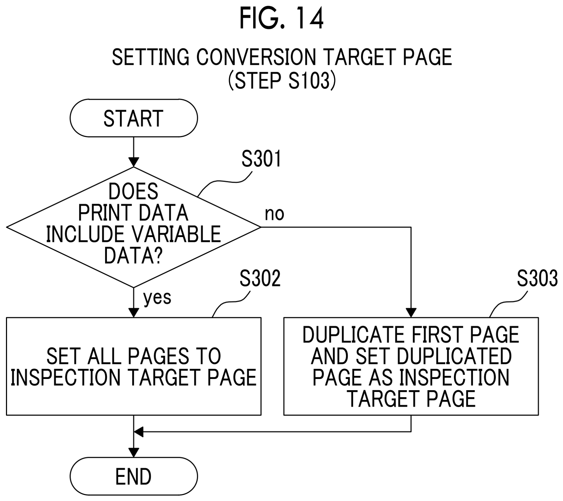

Next, details of the process in setting the conversion target page in step S103 of the flowchart in FIG. 12 will be illustrated in the flowchart in FIG. 14.

First, in step S301, the control unit 35 determines whether or not the print data includes the variable data.

In a case where it is determined in step S301 that the print data includes the variable data, the control unit 35 sets all pages as the inspection target pages in step S302. In a case where it is determined in step S301 that the print data does not include the variable data, the control unit 35 duplicates the first page in step S303 and sets the duplicated page as the inspection target page.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In the exemplary embodiments described above, the operation of the processor may not only be performed by one processor, but may also be performed by a plurality of processors which are located physically apart from each other cooperatively. Also, the order of each operation of the processor is not limited to one described in the exemplary embodiments described above, and may be changed as appropriate.

The "system" in the present exemplary embodiment includes both a system that is configured by a plurality of apparatuses and a system that is configured by a single apparatus.

The present disclosure can also be applied to a program and a program product.

### [Modification Example]

In the exemplary embodiment described above, a case where the print data is generated in the terminal apparatus 10 constituting the image forming system is described, but the present disclosure is not limited thereto. The present disclosure can be similarly applied even in a case where print data is generated in an information processing apparatus such as a personal computer that is provided independently of the image forming system.

### [Supplementary Notes]

(((1))) An information processing system comprising:
   a processor configured to:
   convert, among images of an inspection target region included in print data to be printed, an image with which a preset inspection condition is not satisfied into an image with which the inspection condition is satisfied.
(((2))) The information processing system according to (((1))), wherein the processor is configured to:
   convert, among images of an inspection target location included in the print data to be printed, an image with which the inspection condition is not satisfied into an image with which the inspection condition is satisfied, according to a conversion level for setting a conversion degree in a case of converting the image of the inspection target location.
(((3))) The information processing system according to (((1))) or (((2))), wherein the processor is configured to:
   determine an image with which a preset condition is satisfied among the images included in the print data, as the image of the inspection target region.
(((4))) The information processing system according to (((3))), wherein the processor is configured to:
   determine a region in which a printing content changes for each page of a printout, as the inspection target region.
(((5))) The information processing system according to (((3))), wherein the processor is configured to:
   determine a region including a code image as the inspection target region.
(((6))) The information processing system according to any one of (((1))) to (((5))), wherein the processor is configured to:
   for print data having an identical printing content for each page, by using an image obtained by duplicating a first page as an inspection page, convert an image with which the inspection condition is not satisfied into an image with which the inspection condition is satisfied, among images of an inspection target region included in print data of the inspection page.
(((7))) The information processing system according to (((6))), wherein the processor is configured to:
   convert a code image included in the print data into an image with which the inspection condition is satisfied even in a case where the code image is located on a page other than the inspection page.
(((8))) The information processing system according to any one of (((1))) to (((7))), wherein the processor is configured to:
   display a printing result based on print data after the image of the inspection target region is converted into the image with which the preset inspection condition is satisfied on a display unit before a start of a printing process, and start the printing process in a case where a printing start instruction is received.
(((9))) The information processing system according to any one of (((1))) to (((8))),
   wherein in a case where the image of the inspection target region is a code image, at least one condition among a peripheral margin amount of the code image, a background color, a code type, a code color, or a size of the code image is set as the inspection condition, and
   in a case where the image of the inspection target region is a text image, at least one condition among a text type, a font type of the text, a font size, a text color, a background color, or a peripheral margin amount of the text image is set as the inspection condition.
(((10))) A program causing a computer to execute:
   receiving print data to be printed; and
   converting, among images of an inspection target region included in the print data, an image with which a preset inspection condition is not satisfied into an image with which the inspection condition is satisfied.

With the information processing system according to (((1))), it is possible to generate the print data with which the inspection condition is satisfied even in a case where a user does not understand the inspection condition in inspecting the printout.

With the information processing system according to (((2))), it is possible to adjust the conversion degree in a case of converting the image of the inspection target location.

With the information processing system according to (((3))), it is possible to save time and effort of the user for designating the image of the inspection target region.

With the information processing system according to (((4))), it is possible to save the time and effort of the user for designating the image of the region in which the printing content changes for each page as the image of the inspection target region.

With the information processing system according to (((5))), it is possible to save the time and effort of the user who designates the code image as the image of the inspection target region.

With the information processing system according to (((6))), it is possible to prevent the same inspection from being executed on all pages for the print data having an identical printing content for each page.

With the information processing system according to (((7))), it is possible to prevent occurrence of a defect in which the code image of the printout cannot be scanned.

With the information processing system according to (((8))), the printing process can be started after a check by the user.

With the information processing system according to (((9))), it is possible to generate the print data with which the inspection condition is satisfied even in a case where the user does not understand the inspection condition in inspecting the printout including the code image or the text image.

With the program according to (((10))), it is possible to generate the print data with which the inspection condition is satisfied even in a case where the user does not understand the inspection condition in inspecting the printout.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: terminal apparatus
11: CPU
12: memory
13: storage device
14: communication interface
15: user interface device
16: control bus
20: printing apparatus
21: scanning device
22: switching device
30: inspection apparatus
32: operation input unit
33: display unit
34: data transmission and reception unit
35: control unit
36: data storage unit
40: network
41 to 45: inspection target region
51, 52: inspection target region

## Claims

1. An information processing system comprising:
a processor configured to:
convert, among images of an inspection target region included in print data to be printed, an image with which a preset inspection condition is not satisfied into an image with which the inspection condition is satisfied.

2. The information processing system according to claim 1, wherein the processor is configured to:
convert, among images of an inspection target location included in the print data to be printed, an image with which the inspection condition is not satisfied into an image with which the inspection condition is satisfied, according to a conversion level for setting a conversion degree in a case of converting the image of the inspection target location.

3. The information processing system according to claim 1 or 2, wherein the processor is configured to:
determine an image with which a preset condition is satisfied among the images included in the print data, as the image of the inspection target region.

4. The information processing system according to claim 3, wherein the processor is configured to:
determine a region in which a printing content changes for each page of a printout, as the inspection target region.

5. The information processing system according to claim 3, wherein the processor is configured to:
determine a region including a code image as the inspection target region.

6. The information processing system according to any one of claims 1 to 5, wherein the processor is configured to:
for print data having an identical printing content for each page, by using an image obtained by duplicating a first page as an inspection page, convert an image with which the inspection condition is not satisfied into an image with which the inspection condition is satisfied, among images of an inspection target region included in print data of the inspection page.

7. The information processing system according to claim 6, wherein the processor is configured to:
convert a code image included in the print data into an image with which the inspection condition is satisfied even in a case where the code image is located on a page other than the inspection page.

8. The information processing system according to any one of claims 1 to 7, wherein the processor is configured to:
display a printing result based on print data after the image of the inspection target region is converted into the image with which the preset inspection condition is satisfied on a display unit before a start of a printing process, and start the printing process in a case where a printing start instruction is received.

9. The information processing system according to any one of claims 1 to 8,
wherein in a case where the image of the inspection target region is a code image, at least one condition among a peripheral margin amount of the code image, a background color, a code type, a code color, or a size of the code image is set as the inspection condition, and
in a case where the image of the inspection target region is a text image, at least one condition among a text type, a font type of the text, a font size, a text color, a background color, or a peripheral margin amount of the text image is set as the inspection condition.

10. A program causing a computer to execute:
receiving print data to be printed; and
converting, among images of an inspection target region included in the print data, an image with which a preset inspection condition is not satisfied into an image with which the inspection condition is satisfied.

11. An information processing method comprising:
receiving print data to be printed; and
converting, among images of an inspection target region included in the print data, an image with which a preset inspection condition is not satisfied into an image with which the inspection condition is satisfied.
